# EUROPEAN PATENT APPLICATION

(11) **EP 4 834 605 A1**
(43) Date of publication of application: **04.11.2026**
(21) Application number: 24909210.7
(22) Date of filing: 24.12.2024
(51) Int. Cl.: B60H 1/00

(54) **METHOD, APPARATUS AND DEVICE FOR CONTROLLING VEHICLE HEATING SYSTEM, AND VEHICLE AND STORAGE MEDIUM**

(30) Priority: 28.12.2023 CN 202311866806
(71) Applicant: Wuhan Lotus Cars Co., Ltd., Wuhan, Hubei 430056 (CN)
(72) Inventor: TANG, Wenxuan, Wuhan, Hubei 430056 (CN); WANG, Yanbo, Wuhan, Hubei 430056 (CN); RUI, Fulin, Wuhan, Hubei 430056 (CN); YANG, Kai, Wuhan, Hubei 430056 (CN)
(74) Representative: Barker Brettell LLP
(86) International application number: PCT/CN2024/142032
(87) International publication number: WO 2025/140223

(57) **Abstract**

A method, apparatus and device for controlling a vehicle heating system, and a vehicle and a storage medium. The method includes: acquiring, in real time, an ambient temperature, passenger compartment data, pre-valve pressure of a first electronic expansion valve (33) and suction pressure of a second electronic expansion valve (36); starting a heat pump (31), an internal heat exchanger (32), an external heat exchanger (34) and an electromagnetic switch (35), starting the first electronic expansion valve (33) according to a first initial opening degree, and starting the second electronic expansion valve (36) according to a second initial opening degree; automatically controlling the first electronic expansion valve (33) according to the pre-valve pressure and a preset target pre-valve pressure, so that an opening degree of the first electronic expansion valve (33) automatically changes, according to a first preset correspondence with a change in the pre-valve pressure; and automatically controlling the second electronic expansion valve (36) according to the suction pressure and a preset target suction pressure, so that the opening degree of the second electronic expansion valve (36) automatically changes according to a second preset correspondence with a change in the suction pressure. Therefore, the overall cost of a vehicle can be reduced in this application.

## Description

This application claims priority to Chinese Patent Application No. 2023118668064, filed with the China National Intellectual Property Administration on December 28, 2023, and entitled "METHOD, APPARATUS AND DEVICE FOR CONTROLLING VEHICLE HEATING SYSTEM, AND VEHICLE AND STORAGE MEDIUM", the entire contents of which are incorporated herein by reference.

### TECHNICAL FIELD

The present application relates to, but is not limited to, the technical field of vehicles, and in particular, to a method, an apparatus and a device for controlling a vehicle heating system, and a vehicle and a storage medium.

### BACKGROUND

With the popularization of new energy vehicles, in order to increase the range of battery electric vehicles and reduce energy consumption, installing a heating system in the vehicle is one of the common means. How to meet heating requirements through the heating system while reducing vehicle production costs has become one of the hot topics in new energy vehicle research. Common vehicle heating systems have the problem of increasing vehicle costs.

Therefore, there is an urgent need for a control method for a vehicle heat pump system to improve the above technical problem.

### SUMMARY

The following is a brief summary of the subject matter that is described in detail herein. This summary is not intended to limit the protection scope of the claims (The following is a brief summary of subject matter that is described in detail herein. This summary is not intended to be liming as to the scope of the claims.).

The present application provides a method, an apparatus, a device for controlling a vehicle heating system, a vehicle, and a storage medium, which can reduce the overall cost of the vehicle.

The objective of the present invention is achieved by the following technical solutions.

In a first aspect, the present application provides a method for controlling a vehicle heating system, the vehicle heating system including: a heat pump, an internal heat exchanger, a first electronic expansion valve, an external heat exchanger, an electromagnetic switch, and a second electronic expansion valve; where an output end of the heat pump is in communication with an input end of the internal heat exchanger, an output end of the internal heat exchanger is in communication with an input end of the first electronic expansion valve, an output end of the first electronic expansion valve is in communication with an input end of the external heat exchanger, an output end of the external heat exchanger and an output end of the second electronic expansion valve are both in communication with an input end of the heat pump, the external heat exchanger is electrically connected to the electromagnetic switch, and an input end of the second electronic expansion valve is in communication with the output end of the heat pump;
the method being applied to a vehicle controller, and including:
acquiring, in real time, an ambient temperature, passenger compartment data, a pre-valve pressure of the first electronic expansion valve, and a suction pressure of the second electronic expansion valve;
if it is detected that the ambient temperature is less than an external temperature threshold, starting the heat pump, the internal heat exchanger, the external heat exchanger, and the electromagnetic switch, and starting the first electronic expansion valve at a first initial opening degree, and starting the second electronic expansion valve at a second initial opening degree, where the first initial opening degree is determined according to the ambient temperature, and the second initial opening degree is determined according to the passenger compartment data and the ambient temperature;
automatically controlling the first electronic expansion valve according to the pre-valve pressure and a preset target pre-valve pressure, so that an opening degree of the first electronic expansion valve automatically changes according to a first preset correspondence with a change in the pre-valve pressure, and a difference between the pre-valve pressure and the suction pressure is within a preset difference interval;
if it is detected that the second initial opening degree is less than a preset opening degree limit value, automatically controlling the second electronic expansion valve according to the suction pressure and a preset target suction pressure, so that the opening degree of the second electronic expansion valve automatically changes according to a second preset correspondence with a change in the suction pressure.

In a possible implementation, the passenger compartment data includes a passenger compartment thermal load; correspondingly, the second initial opening degree is determined according to the passenger compartment data and the ambient temperature, including: the second initial opening degree is determined according to the passenger compartment thermal load data and the ambient temperature.

In a possible implementation, automatically the controlling the first electronic expansion valve according to the pre-valve pressure and the preset target pre-valve pressure, so that the opening degree of the first electronic expansion valve automatically changes according to the first preset correspondence with the change in the pre-valve pressure, includes: automatically controlling the first electronic expansion valve according to the pre-valve pressure and the preset target pre-valve pressure using an automatic control algorithm PID, so that the first electronic expansion valve automatically changes with the change in the pre-valve pressure according to a correspondence in which the opening degree is inversely proportional to the pre-valve pressure, and the difference between the pre-valve pressure and the suction pressure is within a preset difference interval.

In a possible implementation, the automatically controlling the second electronic expansion valve according to the suction pressure and the preset target pressure difference, so that the opening degree of the second electronic expansion valve automatically changes according to the second preset correspondence with a change in the suction pressure, includes: determining a suction pressure difference according to the suction pressure and the preset target suction pressure; and automatically controlling the second electronic expansion valve according to the suction pressure difference using a stepwise approximation automatic control algorithm, so that the opening degree of the second electronic expansion valve automatically changes with the change in the passenger compartment data or the ambient temperature according to a correspondence in which the opening degree is proportional to the suction pressure.

In a possible implementation, the method further includes: acquiring, in real time, a suction temperature of the first electronic expansion valve; if it is detected that the suction temperature is greater than a temperature limit value, correcting the preset target pre-valve pressure according to a correspondence in which a target pre-valve pressure is inversely proportional to the suction temperature, to obtain an updated target pre-valve pressure, and jumping to the step of automatically controlling the first electronic expansion valve according to the pre-valve pressure and the preset target pre-valve pressure.

In a possible implementation, the passenger compartment data includes an outlet air temperature of a heating, ventilation, and air conditioning system; correspondingly, after acquiring, in real time, the ambient temperature, the passenger compartment data, the pre-valve pressure of the first electronic expansion valve, and the suction pressure of the second electronic expansion valve, the method further includes: acquiring system operation time of the vehicle heating system; if it is detected that the second initial opening degree is greater than or equal to a preset opening degree limit value, determining a temperature difference according to the outlet air temperature of the HVAC system and a preset target temperature; and if it is detected that the temperature difference is greater than a preset temperature difference threshold, or the system operation time reaches a preset time threshold, jumping to the step of automatically controlling the second electronic expansion valve according to the suction pressure and the preset target suction pressure, so that the opening degree of the second electronic expansion valve automatically changes with the change in the passenger compartment data or the ambient temperature according to a second preset correspondence.

In a possible implementation, the method further includes: if it is detected that the ambient temperature is greater than or equal to the external temperature threshold, controlling the second electronic expansion valve and the electromagnetic switch to be closed.

In a possible implementation, the method further includes: acquiring, in real time, a PCBA temperature of a control circuit board of the heat pump; if it is detected that the PCBA temperature exceeds a preset calibration value, controlling the opening degree of the first electronic expansion valve and the opening degree of the second electronic expansion valve to remain unchanged.

In a second aspect, the present application provides an apparatus for controlling a vehicle heating system, the vehicle heating system including: a heat pump, an internal heat exchanger, a first electronic expansion valve, an external heat exchanger, an electromagnetic switch, and a second electronic expansion valve; where an output end of the heat pump is in communication with an input end of the internal heat exchanger, an output end of the internal heat exchanger is in communication with an input end of the first electronic expansion valve, an output end of the first electronic expansion valve is in communication with an input end of the external heat exchanger, an output end of the external heat exchanger and an output end of the second electronic expansion valve are both in communication with an input end of the heat pump, the external heat exchanger is electrically connected to the electromagnetic switch, and an input end of the second electronic expansion valve is in communication with the output end of the heat pump;
the apparatus being applied to a vehicle controller, and including:
an acquisition module, configured to acquire, in real time, an ambient temperature, passenger compartment data, a pre-valve pressure of the first electronic expansion valve, and a suction pressure of the second electronic expansion valve;
a starting module, configured to, if it is detected that the ambient temperature is less than an external temperature threshold, start the heat pump, the internal heat exchanger, the external heat exchanger, and the electromagnetic switch, and start the first electronic expansion valve at a first initial opening degree, and start the second electronic expansion valve at a second initial opening degree, where the first initial opening degree is determined according to the ambient temperature, and the second initial opening degree is determined according to the passenger compartment data and the ambient temperature;
a control module, configured to automatically control the first electronic expansion valve according to the pre-valve pressure and a preset target pre-valve pressure, so that an opening degree of the first electronic expansion valve automatically changes according to a first preset correspondence with a change in the pre-valve pressure, and a difference between the pre-valve pressure and the suction pressure is within a preset difference interval;
the control module is further configured to, if it is detected that the second initial opening degree is less than a preset opening degree limit value, automatically control the second electronic expansion valve according to the suction pressure and a preset target suction pressure, so that an opening degree of the second electronic expansion valve automatically changes according to a second preset correspondence with a change in the suction pressure.

In a third aspect, the present application provides a device for controlling a vehicle heating system, including: at least one processor and a memory;
the memory stores a computer-executable instruction;
the at least one processor executes the computer-executable instruction stored in the memory, causing the at least one processor to perform the method for controlling the vehicle heating system as described in the first aspect above.

In a fourth aspect, the present application provides a vehicle, including: a vehicle body, and the control device for a vehicle heating system as described in the third aspect disposed within the vehicle body.

In a fourth aspect, the present application provides a computer-readable storage medium, where the computer-readable storage medium stores computer-executable instructions, and when a processor executes the computer-executable instructions, the control method for a vehicle heating system as described in the first aspect above is implemented.

The present application provides a method, an apparatus, a device for controlling a vehicle heating system, a vehicle, and a storage medium. By controlling a vehicle heating system having only a single heat pump as a heating source, when it is detected that the ambient temperature of the vehicle is less than an external temperature threshold, the heat pump, the internal heat exchanger, the external heat exchanger, and the electromagnetic switch are started, and the first electronic expansion valve is started at a first initial opening degree, and the second electronic expansion valve is started at a second initial opening degree. Then, the first electronic expansion valve is automatically controlled according to the pre-valve pressure and a preset target pre-valve pressure, so that the opening degree of the first electronic expansion valve automatically changes according to a first preset correspondence with the change in the pre-valve pressure. If it is detected that the second initial opening degree is less than a preset opening degree limit value, the second electronic expansion valve is automatically controlled according to the suction pressure and a preset target suction pressure, so that the opening degree of the second electronic expansion valve automatically changes according to a second preset correspondence with the change in the suction pressure. Throughout a whole control process, the refrigerant, after being heated by the heat pump, is divided into two paths for output. One path of high-temperature and high-pressure refrigerant heats the passenger compartment through the internal heat exchanger, then becomes a low-temperature and low-pressure two-phase refrigerant after being throttled by the first electronic expansion valve, and then returns to the input end of the heat pump through the external heat exchanger. The other path is directly throttled by the second electronic expansion valve, becoming a low-pressure and high-temperature gaseous refrigerant with unchanged enthalpy, and then mixes with the low-temperature and low-pressure two-phase refrigerant to form a saturated gaseous refrigerant, so that the enthalpy of the refrigerant returns to a compressor at the node with the highest energy efficiency, thereby achieving heating under ultra-low temperature conditions. Therefore, it is possible to meet the usage requirements at low temperatures by installing only a vehicle heating system having a single heat pump as a heating source on the vehicle and performing corresponding control, thereby reducing the number of components in the vehicle heating system, lowering the vehicle cost, and reducing the overall vehicle weight.

### BRIEF DESCRIPTION OF DRAWINGS

The accompanying drawings described are some embodiments of the present application. For those of ordinary skill in the art, other drawings may be obtained based on these drawings without creative efforts.
FIG. 1 is a schematic flowchart illustrating the working principle of a vehicle heating system including an electric heater system and a heat pump system in a vehicle heating solution provided in an embodiment of the present application;
FIG. 2 is a schematic diagram of an application scenario of a method for controlling a vehicle heating system provided in an embodiment of the present application;
FIG. 3 is a schematic diagram of structural connection of a vehicle heating system provided in an embodiment of the present application;
FIG. 4 is a schematic flowchart of a method for controlling a vehicle heating system provided in an embodiment of the present application;
FIG. 5 is a pressure-enthalpy diagram during operation of controlling a vehicle heating system when an ambient temperature is less than an external temperature threshold provided in an embodiment of the present application;
FIG. 6 is a schematic structural diagram of an apparatus for controlling a vehicle heating system provided in an embodiment of the present application;
FIG. 7 is a schematic structural diagram of hardware of a device for controlling a vehicle heating system provided in an embodiment of the present application.

Reference signs: 31 - heat pump; 32 - internal heat exchanger; 33 - first electronic expansion valve; 34 - external heat exchanger; 35 - electromagnetic switch; 36 - second electronic expansion valve; 61 - acquisition module; 62 - starting module; 63 - control module; 701 - processor; 702 - memory; 703 - bus.

Other aspects will be appreciated upon reading and understanding the attached figures and detailed description (Other aspects will be appreciated upon reading and understanding the attached figures and detailed description).

### DESCRIPTION OF EMBODIMENTS

In order to make the objectives, technical solutions, and advantages of the embodiments of the present application clearer, the technical solutions in the embodiments of the present application will be described clearly and completely below with reference to the accompanying drawings in the embodiments of the present application. Apparently, the described embodiments are some of, rather than all of, the embodiments of the present application. Based on the embodiments in the present application, all other embodiments obtained by a person of ordinary skill in the art without making creative efforts fall within the scope of protection of the present application.

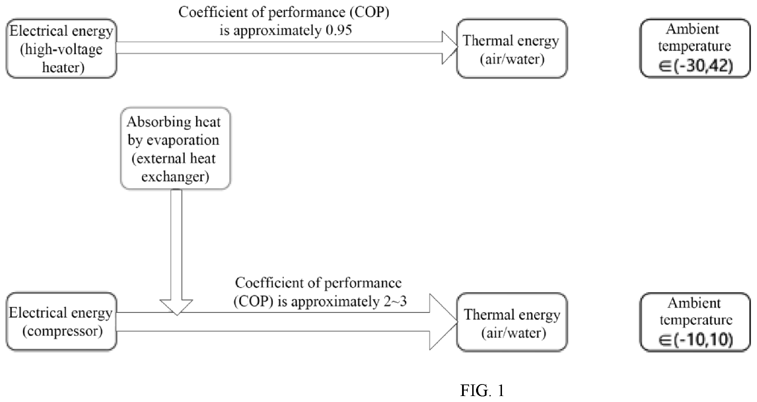

FIG. 1 is a schematic flowchart illustrating the working principle of a vehicle heating system including an electric heater system and a heat pump system in a vehicle heating solution provided in an embodiment of the present application.

As shown in FIG. 1, when the ambient temperature is within the range of (-10°C, 10°C), the heat pump is started. The heat pump uses electrical energy to heat the air and, through evaporation of the refrigerant in the external heat exchanger to absorb heat, releases thermal energy. The coefficient of performance (COP) of this process is generally between 2 and 3. Although the energy consumption is relatively high, when the ambient temperature falls below -10°C, it cannot effectively heat the passenger compartment. Therefore, when the ambient temperature is less than -10°C, the electric heater is started. The high-voltage heater directly heats the refrigerant using electrical energy, and the coefficient of performance (COP) of this process is approximately 0.95. It can be seen that configuring both a heat pump system and an electric heater system in a vehicle increases the overall cost of the vehicle due to the use of components such as pipes, water pumps, and the electric heater.

The embodiments of the present application provide the following technical concept: using only a heat pump system to constitute a vehicle heating system, adding only an electromagnetic switch and two electronic expansion valves to the original heat pump system, and by simultaneously coordinating and adjusting the two electronic expansion valves, completing the low-temperature heating process using only the heat generated by the heat pump, thereby reducing heating components such as water pumps, electric heaters, and pipes, further reducing the overall vehicle weight and lowering the overall cost of the vehicle.

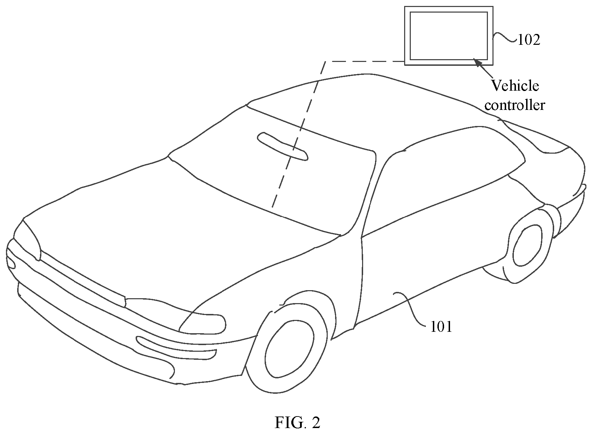

FIG. 2 is a schematic diagram of an application scenario of a method for controlling a vehicle heating system provided in an embodiment of the present application. As shown in FIG. 2, it includes: a vehicle 101 and a vehicle controller 102.

A vehicle heating system, a vehicle controller 102, and sensors for collecting ambient temperature, passenger compartment temperature, and various valve-related parameters in the vehicle heating system are installed in the vehicle 101. The vehicle controller 102 is configured to control the vehicle heating system to execute the method for controlling the vehicle heating system when the ambient temperature is lower than a low-temperature limit value, such as -10°C, so as to complete the heating process of the vehicle.

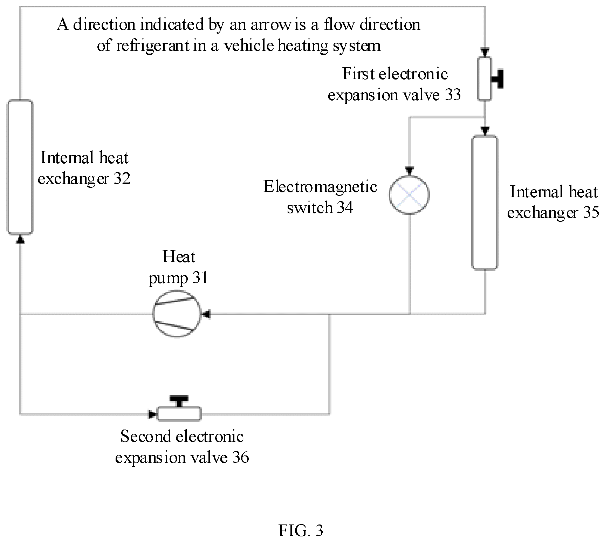

FIG. 3 is a schematic diagram of structural connection of a vehicle heating system provided in an embodiment of the present application.

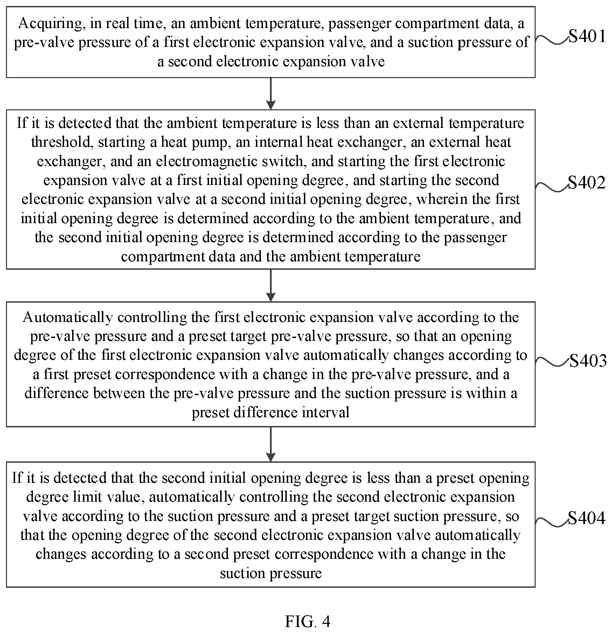

FIG. 4 is a schematic flowchart of a method for controlling a vehicle heating system provided in an embodiment of the present application.

The execution subject of the present embodiment may be the vehicle controller 102 in the embodiment shown in FIG. 2, or may be other controllers, chips, or related computer devices with control functions, which is not particularly limited in this embodiment.

As shown in FIG. 3, the vehicle heating system provided in the embodiment of the present application includes: a heat pump 31, an internal heat exchanger 32, a first electronic expansion valve 33, an external heat exchanger 34, an electromagnetic switch 35, and a second electronic expansion valve 36.

The output end of the heat pump 31 is in communication with the input end of the internal heat exchanger 32, the output end of the internal heat exchanger 32 is in communication with the input end of the first electronic expansion valve 33, the output end of the first electronic expansion valve 33 is in communication with the input end of the external heat exchanger 34, the output end of the external heat exchanger 33 and the output end of the second electronic expansion valve 36 are both in communication with the input end of the heat pump 31, the external heat exchanger 34 is electrically connected to the electromagnetic switch 35, and the input end of the second electronic expansion valve 36 is in communication with the output end of the heat pump 31.

As shown in FIG. 3, in the present embodiment, when the ambient temperature reaches an ultra-low temperature condition, e.g., below -10°C, the refrigerant is compressed and heated in the heat pump 31 into a high-temperature and high-pressure refrigerant. The high-temperature and high-pressure refrigerant is divided into two paths at the output end of the heat pump 31. The first path is as follows: the high-temperature and high-pressure refrigerant passes through the internal heat exchanger 32 to heat the passenger compartment, then flows through the first electronic expansion valve 33 and is throttled into a low-pressure and low-temperature two-phase refrigerant, and finally flows through the external heat exchanger 34. At this time, the electromagnetic switch 35 is turned on to control the operation of the external heat exchanger 34, allowing the low-temperature and low-pressure refrigerant to flow out through the external heat exchanger 34. The second path is as follows: a portion of the high-temperature and high-pressure refrigerant flows through the second electronic expansion valve 36 and is throttled into a low-pressure and high-temperature gaseous refrigerant with unchanged enthalpy. This low-pressure and high-temperature gaseous refrigerant is mixed with the low-temperature and low-pressure refrigerant flowing out from the output end of the external heat exchanger 34 in the first path to form a saturated gaseous refrigerant having a certain enthalpy value, which then returns to the compressor.

When the temperature is higher than an ultra-low temperature condition, e.g., above -10°C, in order to reduce energy consumption, the second electronic expansion valve 36 in the second path described in the above embodiment may be closed. The difference from the first path in the above embodiment is that the electromagnetic switch 33 is closed, so that when the expanded refrigerant flowing out through the electronic expansion valve passes through the external heat exchanger, the refrigerant absorbs heat from the environment and then returns to the heat pump.

As shown in FIG. 4, the method for controlling the vehicle heating system being applied to a vehicle controller, and including:
S401: acquiring, in real time, an ambient temperature, passenger compartment data, a pre-valve pressure of the first electronic expansion valve, and a suction pressure of the second electronic expansion valve.

In the present embodiment, the ambient temperature may be obtained by collecting the air temperature around the vehicle using a temperature sensor, and the passenger compartment data may be obtained via the vehicle's central control system. The passenger compartment data may include data related to the passenger compartment, such as temperature, air outlet wind speed, and air flow rate. The pre-valve pressure refers to the gas pressure of the low-temperature and low-pressure two-phase refrigerant at an inlet of the input end of the first electronic expansion valve. The suction pressure refers to the gas pressure of the high-temperature and high-pressure refrigerant at the inlet of the input end of the second electronic expansion valve.

S402: if it is detected that the ambient temperature is less than an external temperature threshold, starting the heat pump, the internal heat exchanger, the external heat exchanger, and the electromagnetic switch, and starting the first electronic expansion valve at a first initial opening degree, and starting the second electronic expansion valve at a second initial opening degree, where the first initial opening degree is determined according to the ambient temperature, and the second initial opening degree is determined according to the passenger compartment data and the ambient temperature.

In the present embodiment, the external temperature threshold refers to a predetermined ultra-low temperature value. For example, the external temperature threshold may be -10°C. When the ambient temperature is lower than the external temperature threshold, the external heat exchanger cannot absorb heat from the environment. Therefore, the heat pump in combination with the first electronic expansion valve and the second electronic expansion valve may be selected to heat the passenger compartment.

In the present embodiment, the first initial opening degree is a fixed initial step number used at an initial moment when the first electronic expansion valve is started. The first initial opening degree may be determined by pre-control based on the ambient temperature, where pre-control refers to matching according to a correspondence between the ambient temperature and the first initial opening degree, and different ambient temperatures are matched with different first initial opening degrees. For example, when the ambient temperature is -15°C, the matched initial opening degree may be 100%.

The second initial opening degree is a fixed initial step number used at an initial moment when the second electronic expansion valve is started. The determination process of the second initial opening degree may be a pre-control process based on the passenger compartment data and the ambient temperature.

Specifically, in an optional embodiment of the present application, the passenger compartment data includes a passenger compartment thermal load. Correspondingly, in step S402, the second initial opening degree is determined according to the passenger compartment data and the ambient temperature, includes: the second initial opening degree is determined according to the passenger compartment thermal load data and the ambient temperature.

In the present embodiment, the passenger compartment thermal load can be understood as treating the passenger compartment as a heat-consuming component. The passenger compartment thermal load can be determined by calculating the heat consumption data of the passenger compartment over a certain period of time. Both the passenger compartment thermal load and the ambient temperature affect the determination of the second initial opening degree. The relationship is as follows: the greater the passenger compartment thermal load, the larger the second initial opening degree of the second electronic expansion valve 36, and vice versa. In addition, the lower the ambient temperature, the larger the second initial opening degree of the electronic expansion valve, and vice versa.

S403: automatically controlling the first electronic expansion valve according to the pre-valve pressure and a preset target pre-valve pressure, so that an opening degree of the first electronic expansion valve automatically changes according to a first preset correspondence with a change in the pre-valve pressure, and a difference between the pre-valve pressure and the suction pressure is within a preset difference interval.

In the present embodiment, the preset target pre-valve pressure refers to a preset fixed pre-valve pressure or a safe pressure for actual use marked at the factory for the first electronic expansion valve. For example, the preset target pre-valve pressure may be set to any value between 12 bar and 15 bar (calibration value 8), where calibration value 8 means that the marked pressure is 8 bar.

Automatic control refers to a process of controlling the opening degree of the first electronic expansion valve to change automatically through a preset automatic control algorithm or program. The first preset relationship may be corresponding data that affects the opening degree during the automatic control process of the first electronic expansion valve. When the corresponding data changes, the opening degree of the first electronic expansion valve also changes accordingly, so as to meet the vehicle heating requirement when the ambient temperature is lower than the external temperature threshold. In the present embodiment, the difference between the pre-valve pressure and the suction pressure being within a preset difference interval means that after automatically controlling the opening degrees of the first electronic expansion valve and the second electronic expansion valve, the enthalpy value of the saturated gaseous refrigerant flowing back to the heat pump as described in the above embodiments is adjusted to an appropriate value, such as the enthalpy value of the refrigerant at the beginning when the heat pump performs work to heat the air.

Specifically, in an optional embodiment of the present application, step S403 includes: automatically controlling the first electronic expansion valve according to the pre-valve pressure and the preset target pre-valve pressure using an automatic control algorithm PID, so that the first electronic expansion valve automatically changes with the change in the pre-valve pressure according to a correspondence in which the opening degree is inversely proportional to the pre-valve pressure, and the difference between the pre-valve pressure and the suction pressure is within a preset difference interval. The first electronic expansion valve is automatically controlled according to the pre-valve pressure and the preset target pre-valve pressure using the automatic control algorithm PID, so that the first electronic expansion valve automatically changes with the change in the pre-valve pressure according to the correspondence in which the opening degree is inversely proportional to the pre-valve pressure, and the difference between the pre-valve pressure and the suction pressure is within the preset difference interval.

In the present embodiment, the correspondence in which the opening degree of the first electronic expansion valve is inversely proportional to the pre-valve pressure means that during the automatic control of the first electronic expansion valve using the PID automatic control algorithm, when the opening degree of the first electronic expansion valve increases, the pre-valve pressure decreases, and vice versa. Moreover, during the automatic control process, the pre-valve pressure must not exceed the preset target pre-valve pressure. The preset target pre-valve pressure may be the maximum value in the pre-valve pressure range for safe operation of the first electronic expansion valve, for example, 12 bar.

S404: if it is detected that the second initial opening degree is less than a preset opening degree limit value, automatically controlling the second electronic expansion valve according to the suction pressure and a preset target suction pressure, so that the opening degree of the second electronic expansion valve automatically changes according to a second preset correspondence with a change in the suction pressure.

In the present embodiment, when it is detected that the second initial opening degree is less than the preset opening degree limit value, it indicates that automatic control of the second electronic expansion valve may begin. The preset opening degree limit value may be a preset opening degree value, for example, the preset opening degree limit value may be 90%. When the second initial opening degree is less than 90%, automatic control may be entered. The preset target suction pressure refers to a preset suction pressure value of the second electronic expansion valve, which may be a factory-calibrated maximum value. In the present embodiment, the second preset correspondence may be a correspondence between the suction pressure and the opening degree of the second expansion valve.

Specifically, in an optional embodiment of the present application, step S404 includes:
S404a: determining a suction pressure difference according to the suction pressure and a preset target suction pressure;
S404b: automatically controlling the second electronic expansion valve according to the suction pressure difference using a stepwise approximation automatic control algorithm, so that the opening degree of the second electronic expansion valve automatically changes with the change in the suction pressure according to a correspondence in which the opening degree is proportional to the suction pressure.

In the present embodiment, the stepwise approximation automatic control algorithm may be a process of adjusting the suction pressure by controlling the opening degree of the second expansion valve so that the actual suction pressure gradually approaches the preset target suction pressure, i.e., controlling the suction pressure difference to gradually approach zero. In the present embodiment, the stepwise approximation method may be preloaded into the control instructions using an algorithmic program.

In the present embodiment, the correspondence in which the opening degree is proportional to the suction pressure means that when the opening degree of the second expansion valve increases, the corresponding suction pressure increases, and when the opening degree of the second expansion valve decreases, the corresponding suction pressure also decreases.

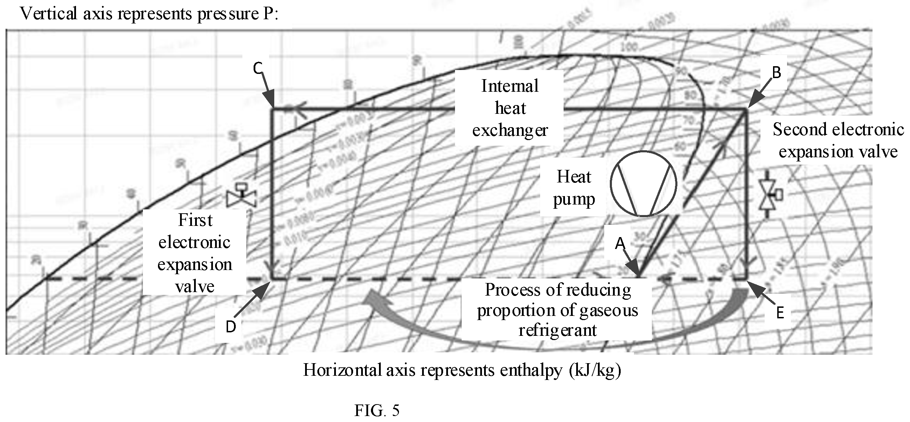

FIG. 5 is a pressure-enthalpy diagram during operation of controlling a vehicle heating system when the ambient temperature is less than an external temperature threshold provided in an embodiment of the present application.

As shown in FIG. 5, after the heat pump is started, the heat pump heats the refrigerant into a high-temperature and high-pressure gaseous refrigerant. Both the pressure and enthalpy of the refrigerant increase, changing from point A to point B. Then, a portion of the refrigerant undergoes heat exchange with the passenger compartment through the internal heat exchanger, reducing the enthalpy while the pressure remains unchanged, becoming a liquid refrigerant at point C. Subsequently, it is throttled by the first electronic expansion valve, keeping the enthalpy unchanged while the pressure decreases, becoming a low-temperature and low-pressure two-phase refrigerant with coexisting gas and liquid at point D. Meanwhile, the other portion of the high-temperature and high-pressure gaseous refrigerant is throttled by the second electronic expansion valve, with the pressure decreasing while the enthalpy remains unchanged, becoming a low-pressure and high-temperature gaseous refrigerant. The low-pressure and high-temperature gaseous refrigerant mixes with the low-temperature and low-pressure refrigerant, and at point A, they remix into a saturated gaseous refrigerant, which then returns to the heat pump.

As can be seen from FIG. 5, during the coordinated operation of the heat pump, the first electronic expansion valve, and the second electronic expansion valve, it is possible to improve energy efficiency while using only the heat pump as a single heating source to heat the passenger compartment when the ambient temperature is lower than the external temperature threshold. Specifically, this is achieved by simultaneously coordinating the opening degrees of the first electronic expansion valve and the second electronic expansion valve to control the ratio of the low-pressure high-temperature gaseous refrigerant to the low-pressure low-temperature two-phase refrigerant, the difference between the pre-valve pressure and the suction pressure in corresponding step S403 being within the preset difference interval.

In summary, the method for controlling a vehicle heating system provided in the embodiments of the present application controls a vehicle heating system having only a single heat pump as a heating source. When it is detected that the ambient temperature of the vehicle is less than the external temperature threshold, the heat pump, the internal heat exchanger, the external heat exchanger, and the electromagnetic switch are started, and the first electronic expansion valve is started at a first initial opening degree, and the second electronic expansion valve is started at a second initial opening degree. Then, the first electronic expansion valve is automatically controlled according to the pre-valve pressure and the preset target pre-valve pressure, so that the opening degree of the first electronic expansion valve automatically changes according to a first preset correspondence with the change in the pre-valve pressure. If it is detected that the second initial opening degree is less than the preset opening degree limit value, the second electronic expansion valve is automatically controlled according to the suction pressure and the preset target suction pressure, so that the opening degree of the second electronic expansion valve automatically changes according to a second preset correspondence with the change in the suction pressure. Throughout the whole control process, the refrigerant, after being heated by the heat pump, is divided into two paths for output. One path of high-temperature and high-pressure refrigerant heats the passenger compartment through the internal heat exchanger, then becomes a low-temperature and low-pressure two-phase refrigerant after being throttled by the first electronic expansion valve, and then returns to the input end of the heat pump through the external heat exchanger. The other path is directly throttled by the second electronic expansion valve, becoming a low-pressure and high-temperature gaseous refrigerant with unchanged enthalpy, and then mixes with the low-temperature and low-pressure two-phase refrigerant to form a saturated gaseous refrigerant, so that the enthalpy of the refrigerant returns to the compressor at the node with the highest energy efficiency, thereby achieving heating under ultra-low temperature conditions. Therefore, it is possible to meet the usage requirements at low temperatures by installing only a vehicle heating system having a single heat pump as a heating source on the vehicle and performing corresponding control, thereby reducing the number of components in the vehicle heating system, lowering the vehicle cost, and reducing the overall vehicle weight.

At the same time, in the embodiments of the present application, the original electric heater and other components are also reduced, thereby saving the front compartment layout space of the vehicle.

Based on the above embodiments, in an optional embodiment of the present application, the method for controlling the vehicle heating system further includes:
Step A: acquiring, in real time, a suction temperature of the first electronic expansion valve;
Step B: if it is detected that the suction temperature is greater than a temperature limit value, correcting the preset target pre-valve pressure according to a correspondence in which a target pre-valve pressure is inversely proportional to the suction temperature, to obtain an updated target pre-valve pressure, and jumping to the step of automatically controlling the first electronic expansion valve according to the pre-valve pressure and the preset target pre-valve pressure.

In the present embodiment, the suction temperature refers to the temperature of the gaseous refrigerant at the input end of the first electronic expansion valve. The temperature limit value is a preset temperature value, for example, the temperature limit value may be 20°C. When the suction temperature is greater than 20°C, it indicates that the target pre-valve pressure may be corrected. The correspondence between the pre-valve pressure and the suction temperature may be referred to when correcting the target pre-valve pressure. The higher the suction temperature, the lower the target pre-valve pressure.

In summary, the method for controlling a vehicle heating system provided in the embodiments of the present application further corrects the target pre-valve pressure in real time according to the suction temperature, making the target pre-valve pressure referenced during the automatic control process more accurate, thereby improving the heating effect.

In an optional embodiment of the present application, the passenger compartment data includes an outlet air temperature of a HVAC system. Correspondingly, after step S401, the method further includes:
Step C: acquiring system operation time of the vehicle heating system;
Step D: if it is detected that the second initial opening degree is greater than or equal to a preset opening degree limit value, determining a temperature difference according to the outlet air temperature of the HVAC system and a preset target temperature;
Step E: if it is detected that the temperature difference is greater than a preset temperature difference threshold, or the system operation time reaches a preset time threshold, jumping to the step of automatically controlling the second electronic expansion valve according to the suction pressure and the preset target suction pressure, so that the opening degree of the second electronic expansion valve automatically changes with a change in the passenger compartment data or the ambient temperature according to a second preset correspondence.

In the present embodiment, the system operation time may be the start operation time of the heat pump. The second initial opening degree being greater than or equal to the preset opening degree limit value indicates that the conditions for automatic control of the second electronic expansion valve have not yet been met. Therefore, further determination of the conditions for entering the automatic control mode is required.

In the present embodiment, the preset temperature difference threshold may be a preset temperature difference limit value. For example, the preset temperature difference threshold may be -5K, which means that the HVAC (Heating, Ventilation and Air Conditioning, heating, ventilation and air conditioning) outlet air temperature is 5 Kelvin (also expressible as -5°C) lower than the expected temperature. At this point, it indicates that automatic control of the second electronic expansion valve may begin. Alternatively, when the system operation time reaches a preset time threshold, it indicates that the internal heat exchanger has been heating the passenger compartment for a certain period of time. At this point, the second electronic expansion valve may also be automatically controlled to adjust the enthalpy value of the refrigerant returning to the input end of the heat pump, thus jumping to step S404.

The above embodiments describe the method for controlling the entire vehicle heating system when the ambient temperature is lower than the external temperature threshold. The following will introduce the process for controlling the vehicle heating system when the ambient temperature is greater than or equal to the external temperature threshold.

Based on the above embodiments, in an optional embodiment of the present application, the method for controlling the vehicle heating system further includes: if it is detected that the ambient temperature is greater than or equal to the external temperature threshold, controlling the second electronic expansion valve and the electromagnetic switch to be closed.

In the present embodiment, when the ambient temperature is greater than or equal to the external temperature threshold, it indicates that the refrigerant in the vehicle heating system can absorb heat from the environment when passing through the external heat exchanger before returning to the heat pump. In this case, the method for controlling the heat pump system as shown in FIG. 1 may be followed, which will not be repeated here in the present embodiment. It should be noted that the second electronic expansion valve and the electromagnetic switch may be controlled to be closed, so that the refrigerant exiting the heat pump follows only one circulation path.

In summary, the method for controlling the vehicle heating system provided in the present embodiment, when the ambient temperature is greater than or equal to the external temperature threshold and heat can be absorbed from the environment to heat the passenger compartment, uses only the circulation path of the heat pump, the internal heat exchanger, the first electronic expansion valve, and the external heat exchanger to heat the passenger compartment, thereby achieving the purpose of reducing energy consumption and improving energy efficiency.

Based on the above embodiments, in an optional embodiment of the present application, the method for controlling the vehicle heating system further includes:
Step F: acquiring, in real time, a PCBA temperature of a control circuit board of the heat pump;
Step G: if it is detected that the PCBA temperature exceeds a preset calibration value, controlling the opening degree of the first electronic expansion valve and the opening degree of the second electronic expansion valve to remain unchanged.

In the present embodiment, the PCBA temperature refers to the temperature of the control circuit board inside the heat pump. When the PCBA temperature exceeds a preset calibration value, it may indicate that the PCBA temperature has reached the maximum safe operating temperature. For example, the preset calibration value may be 30°C. If the temperature exceeds 30°C, it may cause abnormal operation or direct damage to the heat pump. At this time, the opening degrees of the first electronic expansion valve and the second electronic expansion valve may be limited from continuing to increase, i.e., the first electronic expansion valve and the second electronic expansion valve are controlled to maintain their current opening degrees.

In an optional embodiment of the present application, if it is detected that the PCBA temperature is below the preset calibration value, the automatic control of the first electronic expansion valve and the second electronic expansion valve is continued, so that the entire vehicle heating system operates normally.

Based on the above embodiments, in an optional embodiment of the present application, in addition to controlling the opening degrees of the first electronic expansion valve and the second electronic expansion valve to remain unchanged, after it is detected that the PCBA temperature exceeds the preset calibration value, the method further includes: controlling the opening degree of the first electronic expansion valve and/or the second electronic expansion valve to decrease.

In the present embodiment, controlling the opening degree of at least one of the first electronic expansion valve and the second electronic expansion valve to decrease can also achieve the purpose of reducing the PCBA temperature.

In summary, the method for controlling a vehicle heating system provided in this embodiment further detects the PCBA temperature in real time and adjusts the operating states of the first electronic expansion valve and the second electronic expansion valve in a timely manner, thereby avoiding damage to the heat pump and improving the operational safety of the vehicle heating system.

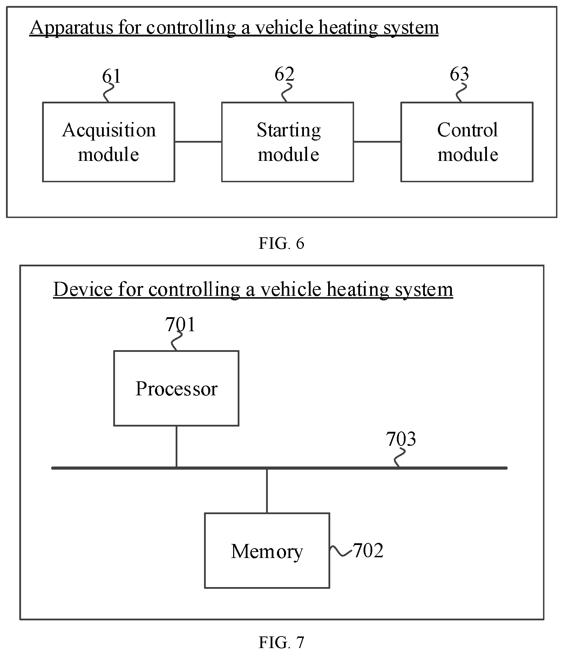

FIG. 6 is a schematic structural diagram of an apparatus for controlling a vehicle heating system provided in an embodiment of the present application. The apparatus includes: an acquisition module 61, a starting module 62, and a control module 63.

The acquisition module 61 is configured to acquire, in real time, an ambient temperature, passenger compartment data, a pre-valve pressure of a first electronic expansion valve, and a suction pressure of a second electronic expansion valve.

The starting module 62 is configured to, if it is detected that the ambient temperature is less than an external temperature threshold, start a heat pump, an internal heat exchanger, an external heat exchanger, and an electromagnetic switch, and start the first electronic expansion valve at a first initial opening degree, and start the second electronic expansion valve at a second initial opening degree, where the first initial opening degree is determined according to the ambient temperature, and the second initial opening degree is determined according to the passenger compartment data and the ambient temperature.

The control module 63 is configured to automatically control the first electronic expansion valve according to the pre-valve pressure and a preset target pre-valve pressure, so that an opening degree of the first electronic expansion valve automatically changes according to a first preset correspondence with a change in the pre-valve pressure, and a difference between the pre-valve pressure and the suction pressure is within a preset difference interval.

The control module 63 is further configured to, if it is detected that the second initial opening degree is less than a preset opening degree limit value, automatically control the second electronic expansion valve according to the suction pressure and a preset target suction pressure, so that an opening degree of the second electronic expansion valve automatically changes according to a second preset correspondence with a change in the suction pressure.

In an optional embodiment of the present application, the passenger compartment data includes a passenger compartment thermal load; correspondingly, the starting module 62 is specifically configured such that the second initial opening degree is determined according to the passenger compartment data and the ambient temperature, including: the second initial opening degree is determined according to the passenger compartment thermal load data and the ambient temperature.

In an optional embodiment of the present application, the control module 63 is specifically configured to: automatically control the first electronic expansion valve according to the pre-valve pressure and the preset target pre-valve pressure using an automatic control algorithm PID, so that the first electronic expansion valve automatically changes with the change in the pre-valve pressure according to a correspondence in which the opening degree is inversely proportional to the pre-valve pressure, and the difference between the pre-valve pressure and the suction pressure is within a preset difference interval.

In an optional embodiment of the present application, the control module 63 is further specifically configured to: determine a suction pressure difference according to the suction pressure and the preset target suction pressure; and automatically control the second electronic expansion valve according to the suction pressure difference using a stepwise approximation automatic control algorithm, so that the opening degree of the second electronic expansion valve automatically changes with the change in the passenger compartment data or the ambient temperature according to a correspondence in which the opening degree is proportional to the suction pressure.

In an optional embodiment of the present application, the acquisition module 61 is further configured to: acquire, in real time, a suction temperature of the first electronic expansion valve. The control module 63 is further configured to: if it is detected that the suction temperature is greater than a temperature limit value, correct the preset target pre-valve pressure according to a correspondence in which a target pre-valve pressure is inversely proportional to the suction temperature, to obtain an updated target pre-valve pressure, and jump to the step of automatically controlling the first electronic expansion valve according to the pre-valve pressure and the preset target pre-valve pressure.

In an optional embodiment of the present application, the passenger compartment data includes an outlet air temperature of a heating, ventilation, and air conditioning system; correspondingly, the acquisition module 61 is further configured to: acquire system operation time of the vehicle heating system; if it is detected that the second initial opening degree is greater than or equal to a preset opening degree limit value, determine a temperature difference according to the outlet air temperature of the HVAC system and a preset target temperature. The control module 63 is further configured to: if it is detected that the temperature difference is greater than a preset temperature difference threshold, or the system operation time reaches a preset time threshold, jump to the step of automatically controlling the second electronic expansion valve according to the suction pressure and the preset target suction pressure, so that the opening degree of the second electronic expansion valve automatically changes with the change in the passenger compartment data or the ambient temperature according to the second preset correspondence.

In an optional embodiment of the present application, the control module 63 is further configured to: if it is detected that the ambient temperature is greater than or equal to the external temperature threshold, control the second electronic expansion valve and the electromagnetic switch to be closed.

In an optional embodiment of the present application, the acquisition module 61 is further configured to: acquire, in real time, a PCBA temperature of a control circuit board of the heat pump; the control module 63 is further configured to: if it is detected that the PCBA temperature exceeds a preset calibration value, control the opening degree of the first electronic expansion valve and the opening degree of the second electronic expansion valve to remain unchanged.

The apparatus for controlling a vehicle heating system provided in the present embodiment can be configured to implement the technical solutions of the above method embodiments. Its implementation principles and technical effects are similar, and will not be repeated in detail here in the present embodiment.

FIG. 7 is a schematic structural diagram of hardware of a device for controlling a vehicle heating system provided in an embodiment of the present application. As shown in FIG. 7, the device includes: at least one processor 701 and a memory 702.

The memory 702 is configured to store a computer-executable instruction.

The processor 701 is configured to execute the computer-executable instruction stored in the memory 702 to implement the various steps involved in the above method embodiments. For details, please refer to the relevant descriptions in the foregoing method embodiments.

Optionally, the memory 702 may be either independent or integrated with the processor 701.

When the memory 702 is provided independently, the device further includes a bus 703 for connecting the memory 702 and the processor 701.

An embodiment of the present application further provides a computer-readable storage medium. The computer-readable storage medium stores computer-executable instructions. When a processor executes the computer-executable instruction, the above method for controlling a vehicle heating system is implemented.

An embodiment of the present application further provides a vehicle. The vehicle includes: a vehicle body, and the control device for a vehicle heating system as described in the embodiment shown in FIG. 7 disposed within the vehicle body.

An embodiment of the present application further provides a computer program product, including a computer program, which, when executed by a processor, implements the above control method for a vehicle heating system.

In the several embodiments provided in the present application, it is to be understood that the disclosed apparatus and method may be implemented in other ways. For example, the apparatus embodiments described above are merely illustrative. For example, the division of the above modules is only a logical function division, and in actual implementation, there may be other division manners. For example, multiple modules may be combined or integrated into another system, or some features may be ignored or not executed. In addition, the mutual coupling, direct coupling, or communication connections shown or discussed may be indirect couplings or communication connections through some interfaces, devices, or modules, and may be electrical, mechanical, or other forms.

The modules described above as separate components may or may not be physically separated. The components shown as modules may or may not be physical units, i.e., they may be located in one place or distributed over multiple network units. Some or all of the modules may be selected according to actual requirements to implement the solutions of the present embodiment.

In addition, each functional module in each embodiment of the present invention may be integrated into one processing unit, may exist physically as separate modules, or two or more modules may be integrated into one unit. The unit formed by the above modules may be implemented in the form of hardware or in the form of hardware plus software functional units.

The integrated modules implemented in the form of software functional modules described above may be stored in a computer-readable storage medium. The above software functional modules are stored in a storage medium and include several instructions to cause a computer device (which may be a personal computer, a server, or a network device, etc.) or a processor to execute some steps of the methods in various embodiments of the present application.

It should be understood that the above-mentioned processor may be a central processing unit (Central Processing Unit, CPU), or may be other general-purpose processors, a digital signal processor (digital signal processor, DSP), an application specific integrated circuit (application specific integrated circuit, ASIC), etc. A general-purpose processor may be a microprocessor, or the processor may be any conventional processor, etc. The steps of the methods disclosed in the invention may be directly implemented as being executed by a hardware processor, or may be executed by a combination of hardware and software modules in the processor.

The memory may include high-speed RAM memory, and may also include non-volatile memory (NVM), such as at least one disk memory. It may also be a USB flash drive, a mobile hard disk, a read-only memory, a magnetic disk, or an optical disk, etc.

The bus may be an industry standard architecture (industry standard architecture, ISA) bus, a peripheral component interconnect (peripheral component interconnect, PCI) bus, or an extended industry standard architecture (extended industry standard architecture, EISA) bus, etc. The bus may be categorized into an address bus, a data bus, a control bus, etc. For ease of illustration, the bus in the drawings of the present application is not limited to only one bus or one type of bus.

The above storage medium may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The storage medium may be any available medium that can be accessed by a general-purpose or special-purpose computer.

An exemplary storage medium is coupled to the processor, enabling the processor to read information from the storage medium and write information to the storage medium. Of course, the storage medium may also be an integral part of the processor. The processor and the storage medium may be located in an application specific integrated circuit (application specific integrated circuits, ASIC). Of course, the processor and the storage medium may also exist as discrete components in an electronic device or a master control device.

A person of ordinary skill in the art can understand that all or part of the steps for implementing the above method embodiments can be completed by hardware related to program instructions. The aforementioned program can be stored in a computer-readable storage medium. When executed, the program performs the steps included in the above method embodiments; and the aforementioned storage medium includes various media that can store program codes, such as ROM, RAM, magnetic disk, or optical disk.

The above is intended to illustrate the technical solutions of the present application, rather than to limit the same. Although the present application has been described in detail with reference to the foregoing embodiments, a person of ordinary skill in the art should understand that they may still modify the technical solutions described in the foregoing embodiments, or make equivalent substitutions for some or all of the technical features thereof. However, such modifications or substitutions do not cause the essence of the corresponding technical solutions to depart from the scope of the technical solutions of the embodiments of the present application.

## Claims

1. A method for controlling a vehicle heating system, wherein the vehicle heating system comprises: a heat pump, an internal heat exchanger, a first electronic expansion valve, an external heat exchanger, an electromagnetic switch, and a second electronic expansion valve; wherein an output end of the heat pump is in communication with an input end of the internal heat exchanger, an output end of the internal heat exchanger is in communication with an input end of the first electronic expansion valve, an output end of the first electronic expansion valve is in communication with an input end of the external heat exchanger, an output end of the external heat exchanger and an output end of the second electronic expansion valve are both in communication with an input end of the heat pump, the external heat exchanger is electrically connected to the electromagnetic switch, and an input end of the second electronic expansion valve is in communication with the output end of the heat pump;
the method for controlling the vehicle heating system being applied to a vehicle controller, and comprising:
acquiring, in real time, an ambient temperature, passenger compartment data, a pre-valve pressure of the first electronic expansion valve, and a suction pressure of the second electronic expansion valve;
if it is detected that the ambient temperature is less than an external temperature threshold, starting the heat pump, the internal heat exchanger, the external heat exchanger, and the electromagnetic switch, and starting the first electronic expansion valve at a first initial opening degree, and starting the second electronic expansion valve at a second initial opening degree, wherein the first initial opening degree is determined according to the ambient temperature, and the second initial opening degree is determined according to the passenger compartment data and the ambient temperature;
automatically controlling the first electronic expansion valve according to the pre-valve pressure and a preset target pre-valve pressure, so that an opening degree of the first electronic expansion valve automatically changes according to a first preset correspondence with a change in the pre-valve pressure, and a difference between the pre-valve pressure and the suction pressure is within a preset difference interval;
if it is detected that the second initial opening degree is less than a preset opening degree limit value, automatically controlling the second electronic expansion valve according to the suction pressure and a preset target suction pressure, so that the opening degree of the second electronic expansion valve automatically changes according to a second preset correspondence with a change in the suction pressure.

2. The method according to claim 1, wherein the passenger compartment data comprises a passenger compartment thermal load;
correspondingly, the second initial opening degree is determined according to the passenger compartment data and the ambient temperature, comprising:
the second initial opening degree is determined according to the passenger compartment thermal load data and the ambient temperature.

3. The method according to claim 1 or 2, wherein the automatically controlling the first electronic expansion valve according to the pre-valve pressure and the preset target pre-valve pressure, so that the opening degree of the first electronic expansion valve automatically changes according to the first preset correspondence with the change in the pre-valve pressure, comprises:
automatically controlling the first electronic expansion valve according to the pre-valve pressure and the preset target pre-valve pressure using an automatic control algorithm PID, so that the first electronic expansion valve automatically changes with the change in the pre-valve pressure according to a correspondence in which the opening degree is inversely proportional to the pre-valve pressure, and the difference between the pre-valve pressure and the suction pressure is within a preset difference interval.

4. The method according to any one of claims 1 to 3, wherein the automatically controlling the second electronic expansion valve according to the suction pressure and the preset target pressure difference, so that the opening degree of the second electronic expansion valve automatically changes according to the second preset correspondence with a change in the suction pressure, comprises:
determining a suction pressure difference according to the suction pressure and the preset target suction pressure;
automatically controlling the second electronic expansion valve according to the suction pressure difference using a stepwise approximation automatic control algorithm, so that the opening degree of the second electronic expansion valve automatically changes with the change in the passenger compartment data or the ambient temperature according to a correspondence in which the opening degree is proportional to the suction pressure.

5. The method according to any one of claims 1 to 4, further comprising:
acquiring, in real time, a suction temperature of the first electronic expansion valve;
if it is detected that the suction temperature is greater than a temperature limit value, correcting the preset target pre-valve pressure according to a correspondence in which a target pre-valve pressure is inversely proportional to the suction temperature, to obtain an updated target pre-valve pressure, and jumping to the step of automatically controlling the first electronic expansion valve according to the pre-valve pressure and the preset target pre-valve pressure.

6. The method according to any one of claims 1 to 5, wherein the passenger compartment data comprises an outlet air temperature of a heating, ventilation, and air conditioning system;
correspondingly, after acquiring, in real time, the ambient temperature, the passenger compartment data, the pre-valve pressure of the first electronic expansion valve, and the suction pressure of the second electronic expansion valve, the method further comprises:
acquiring system operation time of the vehicle heating system;
if it is detected that the second initial opening degree is greater than or equal to a preset opening degree limit value, determining a temperature difference according to the outlet air temperature of the HVAC system and a preset target temperature;
if it is detected that the temperature difference is greater than a preset temperature difference threshold, or the system operation time reaches a preset time threshold, jumping to the step of automatically controlling the second electronic expansion valve according to the suction pressure and the preset target suction pressure, so that the opening degree of the second electronic expansion valve automatically changes with the change in the passenger compartment data or the ambient temperature according to the second preset correspondence.

7. The method according to any one of claims 1 to 6, further comprising:
if it is detected that the ambient temperature is greater than or equal to the external temperature threshold, controlling the second electronic expansion valve and the electromagnetic switch to be closed.

8. The method according to any one of claims 1 to 7, further comprising:
acquiring, in real time, a PCBA temperature of a control circuit board of the heat pump;
if it is detected that the PCBA temperature exceeds a preset calibration value, controlling the opening degree of the first electronic expansion valve and the opening degree of the second electronic expansion valve to remain unchanged.

9. The method according to claim 8, wherein after acquiring, in real time, the PCBA temperature of the control circuit board of the heat pump, the method further comprises:
if it is detected that the PCBA temperature is below the preset calibration value, continuing the automatic control of the first electronic expansion valve and the second electronic expansion valve so that the entire vehicle heating system operates normally.

10. The method according to claim 8, wherein after it is detected that the PCBA temperature exceeds a preset calibration value, the method further comprises:
controlling the opening degree of the first electronic expansion valve and the opening degree of the second electronic expansion valve to decrease;
or controlling the opening degree of the first electronic expansion valve to decrease and the opening degree of the second electronic expansion valve to remain unchanged;
or controlling the opening degree of the first electronic expansion valve to remain unchanged and the opening degree of the second electronic expansion valve to decrease.

11. An apparatus for controlling a vehicle heating system, wherein the vehicle heating system comprises: a heat pump, an internal heat exchanger, a first electronic expansion valve, an external heat exchanger, an electromagnetic switch, and a second electronic expansion valve; wherein an output end of the heat pump is in communication with an input end of the internal heat exchanger, an output end of the internal heat exchanger is in communication with an input end of the first electronic expansion valve, an output end of the first electronic expansion valve is in communication with an input end of the external heat exchanger, an output end of the external heat exchanger and an output end of the second electronic expansion valve are both in communication with an input end of the heat pump, the external heat exchanger is electrically connected to the electromagnetic switch, and an input end of the second electronic expansion valve is in communication with the output end of the heat pump;
the apparatus being applied to a vehicle controller, and comprising:
an acquisition module, configured to acquire, in real time, an ambient temperature, passenger compartment data, a pre-valve pressure of the first electronic expansion valve, and a suction pressure of the second electronic expansion valve;
a starting module, configured to, if it is detected that the ambient temperature is less than an external temperature threshold, start the heat pump, the internal heat exchanger, the external heat exchanger, and the electromagnetic switch, and start the first electronic expansion valve at a first initial opening degree, and start the second electronic expansion valve at a second initial opening degree, wherein the first initial opening degree is determined according to the ambient temperature, and the second initial opening degree is determined according to the passenger compartment data and the ambient temperature;
a control module, configured to automatically control the first electronic expansion valve according to the pre-valve pressure and a preset target pre-valve pressure, so that an opening degree of the first electronic expansion valve automatically changes according to a first preset correspondence with a change in the pre-valve pressure, and a difference between the pre-valve pressure and the suction pressure is within a preset difference interval;
the control module is further configured to, if it is detected that the second initial opening degree is less than a preset opening degree limit value, automatically control the second electronic expansion valve according to the suction pressure and a preset target suction pressure, so that an opening degree of the second electronic expansion valve automatically changes according to a second preset correspondence with a change in the suction pressure.

12. A device for controlling a vehicle heating system, comprising: at least one processor and a memory;
the memory stores a computer-executable instruction;
the at least one processor executes the computer-executable instruction stored in the memory, causing the at least one processor to perform the method for controlling the vehicle heating system according to any one of claims 1 to 10.

13. A vehicle, comprising: a vehicle body, and the device for controlling the vehicle heating system according to claim 12 disposed within the vehicle body.

14. A computer-readable storage medium, wherein the computer-readable storage medium stores a computer-executable instruction, and when a processor executes the computer-executable instruction, the method for controlling the vehicle heating system according to any one of claims 1 to 10 is implemented.
